# EUROPEAN PATENT APPLICATION

(11) **EP 4 357 235 A1**
(43) Date of publication of application: **24.04.2024**
(21) Application number: 22824550.2
(22) Date of filing: 09.03.2022
(51) Int. Cl.: B63B 49/00, G08G 3/02

(54) **SHIP MONITORING SYSTEM, SHIP MONITORING METHOD, INFORMATION PROCESSING DEVICE, AND PROGRAM**

(30) Priority: 15.06.2021 JP 2021099136
(71) Applicant: Furuno Electric Co., Ltd., Nishinomiya-City, Hyogo 662-8580 (JP)
(72) Inventor: TAKEBAYASHI, Yuichi, Nishinomiya-City, Hyogo 662-8580 (JP); NAKAGAWA, Kazuya, Nishinomiya-City, Hyogo 662-8580 (JP); UOSHITA, Seiichi, Nishinomiya-City, Hyogo 662-8580 (JP); TAKAHASHI, Yuta, Nishinomiya-City, Hyogo 662-8580 (JP); YOSHINAGA, Makoto, Nishinomiya-City, Hyogo 662-8580 (JP)
(74) Representative: Müller Hoffmann & Partner
(86) International application number: PCT/JP2022/010259
(87) International publication number: WO 2022/264550

(57) **Abstract**

The present disclosure provides a ship monitoring system which makes it easier to grasp a heading of another ship. The ship monitoring system includes a first data generating part, a second data generating part, a risk value calculating part, and a display unit. The first data generating part generates first ship data indicative of a position and a velocity of a first ship. The second data generating part generates second ship data indicative of a position and a velocity of a second ship. The risk value calculating part calculates a risk value indicative of a risk of the first ship and the second ship colliding each other, for each point on an estimated course of the second ship, based on the first ship data and the second ship data, when assuming that the first ship changes the course and reaches the point. The display unit displays a risk area indicative of a heading of the second ship at the point where the risk value is more than a threshold.

## Description

### TECHNICAL FIELD

The present disclosure relates to a ship monitoring system, a ship monitoring method, an information processor, and a program.

### BACKGROUND ART

Conventionally, various techniques for evaluating a risk of ships colliding to each other exist. For example, Nonpatent Document 1 discloses a technique for displaying an OZT (Obstacle Zone by Target) as a risk area.

### [Reference Document(s) of Conventional Art]

### [Nonpatent Document]

[Nonpatent Document 1] IMAZU, Hayama, FUKUTO, Junji, and NUMANO, Masayoshi, "Obstacle Zone by Targets and Its Expression", The Journal of Japan Institute of Navigation, 2002, Vol. 107, pp. 191-197

### DESCRIPTION OF THE DISCLOSURE

### [Problem(s) to be Solved by the Disclosure]

Meanwhile, according to the technique for displaying the OZT as a risk area, since a circular OZT is displayed away from another ship, it is difficult for a user to grasp a heading of another ship, by just glancing at the OZT.

The present disclosure is made in view of the problem described above, and one main purpose thereof is to provide a ship monitoring system, a ship monitoring method, an information processor, and a program, which make it easier to grasp a heading of another ship.

### [Summary of the Disclosure]

In order to solve the above-described problem, a ship monitoring system according to one aspect of the present disclosure includes a first data generating part, a second data generating part, a risk value calculating part, and a display unit. The first data generating part generates first ship data indicative of a position and a velocity of a first ship. The second data generating part generates second ship data indicative of a position and a velocity of a second ship. The risk value calculating part calculates a risk value indicative of a risk of the first ship and the second ship colliding each other, for each point on an estimated course of the second ship, based on the first ship data and the second ship data, when assuming that the first ship changes the course and reaches the point. The display unit displays a risk area indicative of a heading of the second ship at the point where the risk value is more than a threshold.

Further, a ship monitoring method according to another aspect of the present disclosure includes generating, by a first data generating part, first ship data indicative of a position and a velocity of a first ship, generating, by a second data generating part, second ship data indicative of a position and a velocity of a second ship, calculating a risk value indicative of a risk of the first ship and the second ship colliding each other, for each point on an estimated course of the second ship, based on the first ship data and the second ship data, when assuming that the first ship changes the course and reaches the point, and displaying a risk area indicative of a heading of the second ship at the point where the risk value is more than a threshold.

Further, an information processor according to another aspect of the present disclosure includes a risk value calculating part and a display controlling part. The risk value calculating part calculates a risk value indicative of a risk of a first ship and a second ship colliding each other, for each point on an estimated course of the second ship, based on first ship data indicative of a position and a velocity of the first ship, and second ship data indicative of a position and a velocity of the second ship, when assuming that the first ship changes the course and reaches the point. The display controlling part displays a risk area indicative of a heading of the second ship at the point where the risk value is more than a threshold.

Further, a program according to another aspect of the present disclosure causes a computer to execute processing which includes calculating a risk value indicative of a risk of a first ship and a second ship colliding each other, for each point on an estimated course of the second ship, based on first ship data indicative of a position and a velocity of the first ship, and second ship data indicative of a position and a velocity of the second ship, when assuming that the first ship changes the course and reaches the point, and displaying a risk area indicative of a heading of the second ship at the point where the risk value is more than a threshold.

### [Effect of the Disclosure]

According to the present disclosure, it becomes easier to grasp the heading of another ship.

### BRIEF DESCRIPTION OF DRAWINGS

Fig. 1 is a view illustrating one example of a configuration of a ship monitoring system according to one embodiment.
Fig. 2 is a view illustrating one example of an other-ships management database.
Fig. 3 is a view illustrating one example of conventional indication of an OZT.
Fig. 4 is a view illustrating one example of a configuration of an information processor according to one embodiment.
Fig. 5 is a view illustrating one example of indication of an indicator OZT.
Fig. 6 is a view illustrating one example of indication of the indicator OZT.
Fig. 7 is a view illustrating one example of indication of the indicator OZT.
Fig. 8 is a view illustrating one example of indication of the indicator OZT.
Fig. 9 is a view illustrating one example of indication of the indicator OZT.
Fig. 10 is a view illustrating another example of the indication.

### MODE FOR CARRYING OUT THE DISCLOSURE

Hereinafter, one embodiment of the present disclosure is described with reference to the drawings.

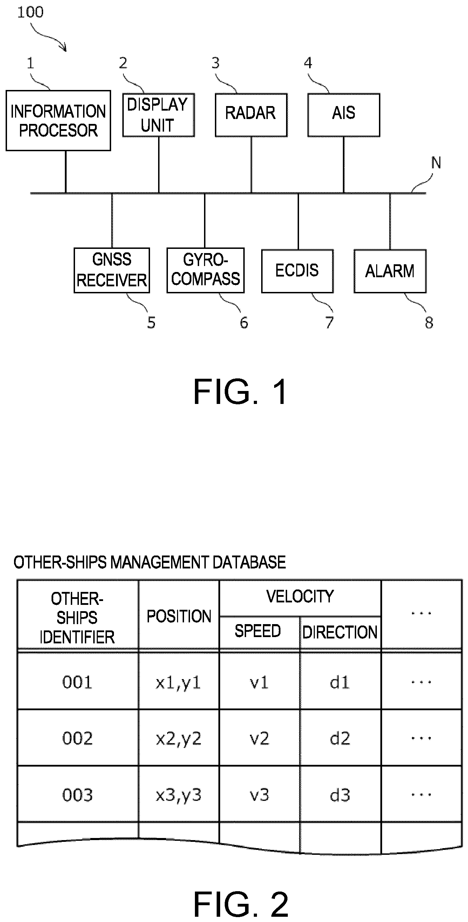

Fig. 1 is a block diagram illustrating one example of a configuration of a ship monitoring system 100 according to this embodiment. A ship monitoring method according to one embodiment may be realized in the ship monitoring system 100. The ship monitoring system 100 may be a system which is mounted on a ship and monitors other ships existing around the ship.

The ship on which the ship monitoring system 100 is mounted is one example of a first ship, and is referred to as "the ship" in the following description. Further, ship(s) which exists around "the ship" is one example of second ship(s), and is referred to as "another ship" or "other ships" in the following description.

Further, in the following description, "velocity" is a vector quantity indicative of a speed and a direction (so-called "ship velocity vector"), and "speed" is a scalar quantity.

The ship monitoring system 100 may include an information processor 1, a display unit 2, a radar 3, an AIS 4, a GNSS receiver 5, a gyrocompass 6, an ECDIS 7, and an alarm 8. These apparatuses may be connected to a network N, such as LAN, so that mutual network communications are possible.

The information processor 1 may be a computer including a CPU, a RAM, a ROM, a nonvolatile memory, and an input/output interface. The CPU of the information processor 1 may perform information processing according to a program loaded to the RAM from the ROM or the nonvolatile memory.

The program may be supplied, for example, via an information storage medium, such as an optical disc or a memory card, or may be supplied, for example, via a communication network, such as the Internet or LAN.

The display unit 2 may be a display device with a touch sensor, for example. The touch sensor may detect an instructed position in a screen which is instructed by a finger etc. The instructed position may be inputted by a trackball etc. instead of the touch sensor.

The radar 3 may transmit a radio wave around the ship, receive a reflection wave thereof, and generate echo data based on a reception signal. Further, the radar 3 may discriminate a target object from the echo data, and generate Target-object Tracking data (TT data) indicative of a position and a velocity of the target object.

The AIS (Automatic Identification System) 4 may receive AIS data from other ships or land controls which exist around the ship. Instead of the AIS, a VDES (VHF Data Exchange System) may also be used. The AIS data includes a position, a velocity, etc. of another ship.

The GNSS receiver 5 may detect the position of the ship based on the radio wave received from a GNSS (Global Navigation Satellite System). The gyrocompass 6 may detect a direction (heading or bearing) of the ship. Instead of the gyrocompass, a GPS compass or a magnetic compass may also be used.

The ECDIS (Electronic Chart Display and The information System) 7 may acquire the position of the ship from the GNSS receiver 5, and display the position of the ship on an electronic nautical chart. Further, the ECDIS 7 may also display a scheduled route of the ship on the electronic nautical chart. Instead of the ECDIS, a GNSS plotter may also be used.

The alarm 8 may issue an alert when there is a risk of the ship colliding with another ship. For example, the alarm 8 may issue the alert by indication, or may issue the alert by sound or light. The alert by indication may be performed by the display unit 2. That is, the display unit 2 may also serve as the alarm 8.

Although in this embodiment the information processor 1 is an independent device, it may be integrated with another device, such as the ECDIS 7. That is, the functional part(s) of the information processor 1 may be realized by other devices, such as the ECDIS 7.

Further, although the display unit 2 is also an independent device, a display unit of another device, such as the ECDIS 7, may be used as the display unit 2 which displays an image generated by the information processor 1.

In this embodiment, a set of the GNSS receiver 5 and the ECDIS 7 is one example of a first data generating part which generates "the-ship data" indicative of a position and a velocity of the ship. In detail, the GNSS receiver 5 may detect the position of the ship, and the ECDIS 7 may detect the velocity of the ship based on a temporal change in the position of the ship.

Alternatively, the velocity of the ship may be detected based on the direction of the ship detected by the gyrocompass 6, and a speed of the ship detected by a ship speed meter (not illustrated).

Further, the radar 3 or the AIS 4 is one example of a second data generating part which generates "other-ships data" indicative of a position and a velocity of another ship. In detail, the TT data generated by the radar 3 may correspond to "other-ships data." The AIS data generated by the AIS 4 may also correspond to "other-ships data."

Fig. 2 is a view illustrating one example of the other-ships management database established in the memory of the information processor 1. The other-ships data generated by the radar 3 or the AIS 4 may be registered into the other-ships management database.

The other-ships management database may include fields, such as "other-ships identifier," "position," "speed," and "direction." Note that the position and the direction (heading or bearing) of another ship which are detected by the radar 3 may be converted into a coordinate system which is the same as the GNSS.

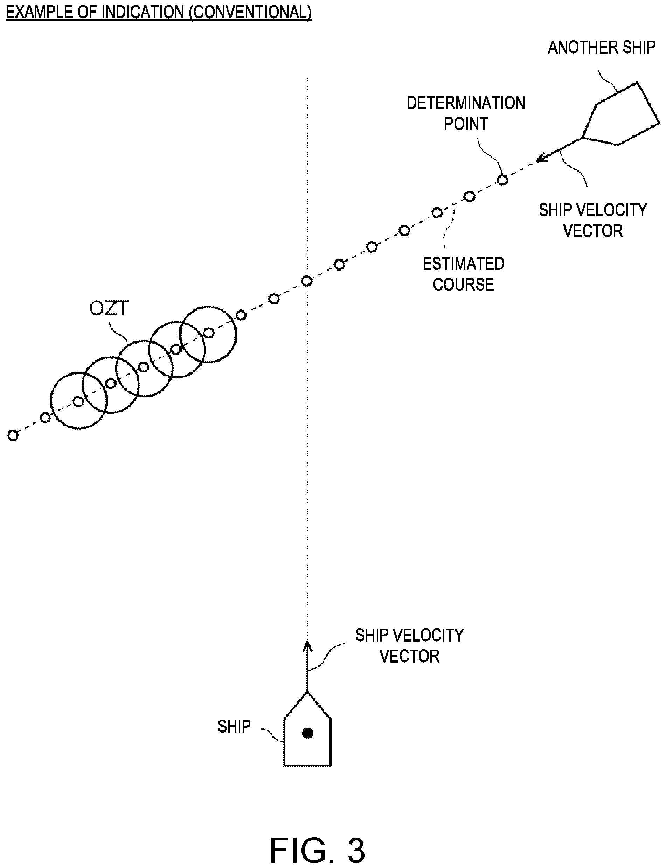

Fig. 3 is a view illustrating one example of conventional indication of an OZT. The OZT (Obstacle Zone by Target) may be a zone where traveling of the ship is obstructed by another ship, and it may be displayed on an estimated course of another ship. The technique of displaying the OZT may calculate a risk value of a collision at each of a plurality of determination points discretely set on the estimated course of another ship, and display the OZT at the determination point where the risk value is more than a threshold.

Meanwhile, although in a crossing encounter relationship a give-way ship (a ship which looks at another ship on the right side) needs to change the course to the right and pass the stern side of another ship according to the navigation rules, in the conventional indication technique of OZT, since a circular OZT is displayed away from another ship, it is difficult for a user to grasp the heading of another ship, by just glancing at the OZT, and it is difficult to judge instantly whether the ship is the give-way ship.

Therefore, in this embodiment, as will be described below, a risk area indicative of the heading of another ship on the course of another ship may be displayed to make it easier for the user to grasp the heading of another ship.

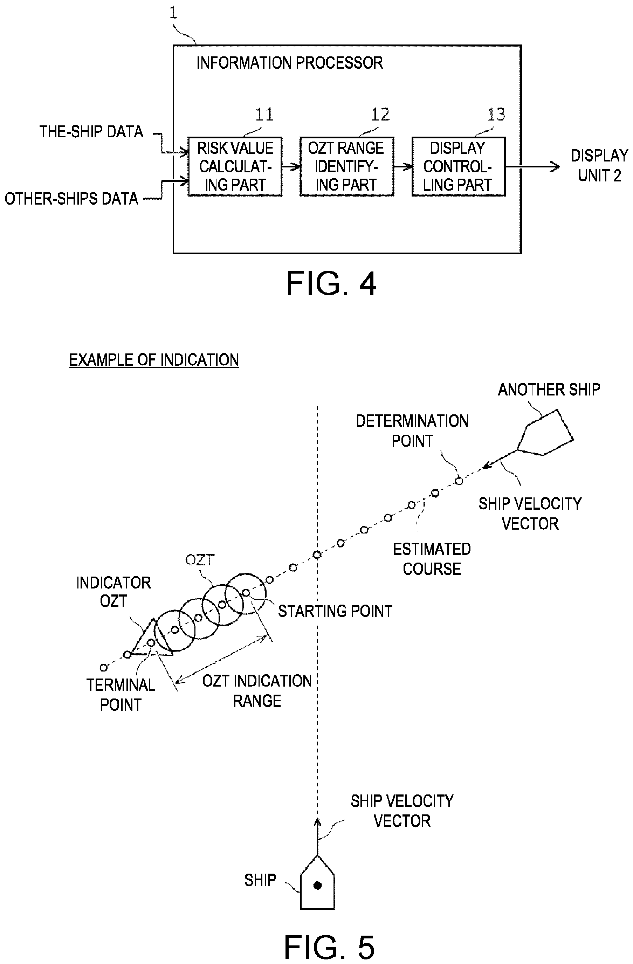

Fig. 4 is a view illustrating one example of a configuration of the information processor 1 which realizes the ship monitoring method according to one embodiment.

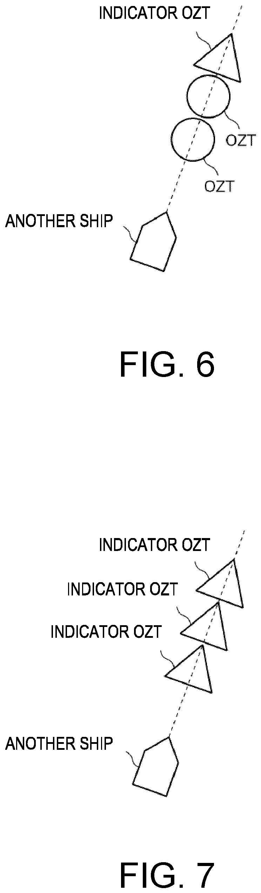

Figs. 5 and 6 are views illustrating one example of indication of an indicator OZT. The indicator OZT is one example of the risk area indicative of the heading of another ship.

The information processor 1 may include a risk value calculating part 11, an OZT range identifying part 12, and a display controlling part 13. These functional parts may be realized by the CPU of the information processor 1 executing information processing according to the program.

When it is assumed that the ship changes the course and reaches each determination point, the risk value calculating part 11 may calculate, for each determination point on the estimated course of another ship, a risk value indicative of a risk of the ship and another ship colliding each other based on the-ship data and other-ships data. A known technique for displaying the OZT may be used for the calculation of the risk value.

In detail, when assuming that the ship changes the course and reaches the determination point from the present position while maintaining the speed, and another ship reaches the determination point from the present position while maintaining the speed, the risk value calculating part 11 may calculate the probability that the ship and another ship exist at the determination point simultaneously as the risk value of the collision, and determine the determination point with the risk value more than a threshold to be an OZT indication point.

The OZT range identifying part 12 may identify a range where two or more continuous determination points have the risk value more than the threshold (OZT indication points), as an OZT indication range. In detail, the OZT range identifying part 12 may identify an OZT indication point which is a starting point of the range where two or more continuous OZT indication points exist, and an OZT indication point which is a terminal point of the range.

The display controlling part 13 may display the OZT at the determination point where the risk value is more than the threshold (OZT indication point). Further, the display controlling part 13 may display at least one of the OZTs as an indicator OZT indicative of the heading of another ship. As illustrated in Fig. 5, a plurality of OZTs are displayed on the estimated course of another ship in an image indicative of the positions of the ship and another ship displayed on the display unit 2, and at least one of the OZTs may be displayed as the indicator OZT.

In detail, the display controlling part 13 may display the indicator OZT at a leading point (the terminal point in Fig. 5) in the heading direction of another ship within the OZT indication range which is identified by the OZT range identifying part 12. Alternatively, the indicator OZT may be displayed at a trailing point (the starting point in Fig. 5) in the heading direction of another ship, or an intermediate point within the OZT indication range.

The indicator OZT may be an OZT having a shape indicative of the heading of another ship. For example, the indicator OZT may be formed in a triangle, which indicates the heading of another ship when one of vertexes of the triangle is oriented to the heading of another ship. Alternatively, the indicator OZT may have an arrow shape or a boomerang or chevron shape, for example.

The indicator OZT may have the size comparable to other circular OZTs. For example, the indicator OZT may be disposed so that the center point is located at the OZT indication point, and a distance from the center point of the indicator OZT to the vertex may be used as a safe separation distance which is the same as the radius of other circular OZTs.

Alternatively, the indicator OZT may be disposed so that the center in the width direction perpendicular to the heading of another ship is located on the estimated course of another ship, and the length from the center of the indicator OZT to the ends in the width direction may be the safe separation distance which is the same as the radius of other circular OZTs.

Note that, when the OZTs are displayed at adjacent determination points, the interval of the determination points may be set so that the OZTs are not separated from each other (that is, the OZTs contact or partially overlap with each other). Thus, the interval of the determination points may become less than the double of the safe separation distance which is the radius of the OZT.

In this embodiment described above, since the indicator OZT indicative of the heading of another ship is displayed on the course of another ship, it becomes easier for the user to grasp the heading of another ship.

Further, in this embodiment, since the indicator OZT is displayed at a point which is a part of the OZT indication range and the circular OZTs are displayed at the remaining points, it is possible to display the heading of another ship by the representative indicator OZT, and display the safe separation distance similarly to the conventional technology by the remaining circular OZTs.

In this embodiment, since the indicator OZT is displayed at the leading point of the OZT indication range in the heading direction of another ship, it becomes especially easier for the user to grasp the heading of another ship.

Further, in this embodiment, since the indicator OZT itself has the shape, such as the triangular shape, indicative of the heading of another ship, it becomes especially easier for the user to grasp the heading of another ship.

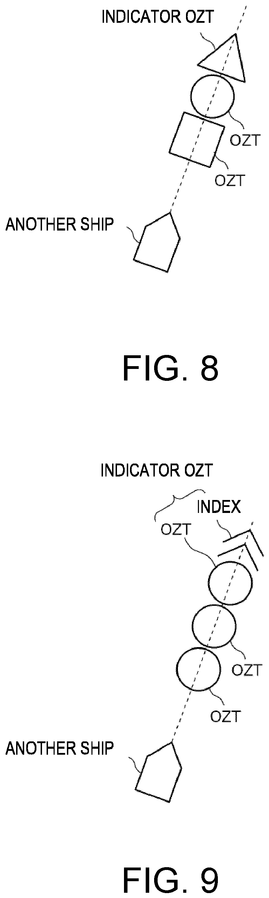

Note that the display mode of the OZT is not limited to the mode in which the indicator OZT is displayed at the head of the OZT indication range as illustrated in Fig. 6. For example, as illustrated in Fig. 7, the indicator OZT may be displayed at all the points in the OZT indication range. Further, as illustrated in Fig. 8, the OZTs other than the indicator OZT may be a quadrangular shape, for example, instead of the circular shape.

Further, as illustrated in Fig. 9, an index having a shape indicative of the heading of another ship may be added to the circular OZT at the head of the OZT indication range and the index OZT may be comprised of the set of the OZT and the index. The index may be formed, for example, in a mountain shape, which indicates the heading of another ship by the orientation of the protrusion. Alternatively, the index may have an arrow shape or a boomerang (chevron) shape, for example.

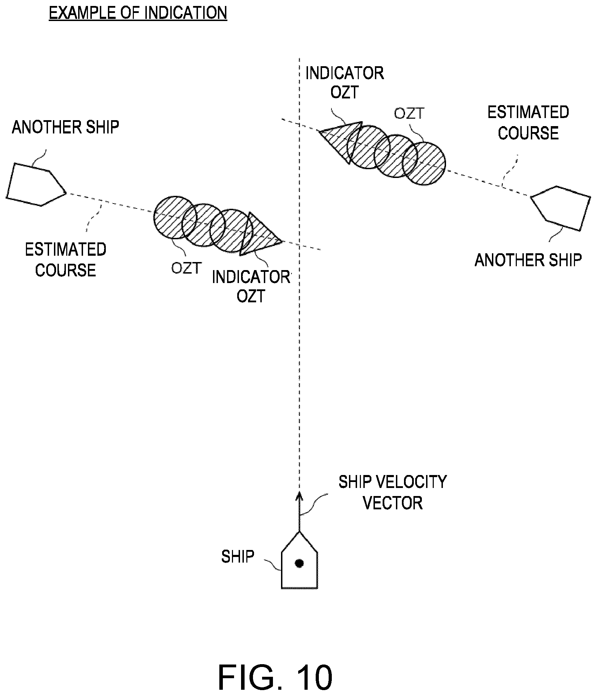

Further, as illustrated in Fig. 10, the OZT of another ship located to the right of the heading line of the ship, and the OZT of another ship located to the left may be displayed in mutually different display modes, such as the shade, color, or texture. For example, the OZT of another ship located to the right of the heading line of the ship may be displayed deeper than the OZT of another ship located to the left. Therefore, it becomes easier to grasp whether the ship is a give-way ship.

Although the embodiment of the present disclosure is described above, the present disclosure is not limited to the embodiment described above, and it is needless to say that various changes are possible for the person skilled in the art.

The risk area indicative of the heading of another ship may be realized, for example, by a PAD (Predict Area of Danger) or a DAC (Dangerous Area of Collision).

### DESCRIPTION OF REFERENCE CHARACTERS

1 Information Processor, 2 Display Unit, 3 Radar, 4 AIS, 5 GNSS Receiver, 6 Gyrocompass, 7 ECDIS, 8 Alarm, 11 Risk Value Calculating Part, 12 OZT Range Identifying Part, 13 Display Controlling Part, 100 Ship Monitoring System

## Claims

1. A ship monitoring system, comprising:
a first data generating part configured to generate first ship data indicative of a position and a velocity of a first ship;
a second data generating part configured to generate second ship data indicative of a position and a velocity of a second ship;
a risk value calculating part configured to calculate a risk value indicative of a risk of the first ship and the second ship colliding each other, for each point on an estimated course of the second ship, based on the first ship data and the second ship data, when assuming that the first ship changes the course and reaches the point; and
a display unit configured to display a risk area indicative of a heading of the second ship at the point where the risk value is more than a threshold.

2. The ship monitoring system of claim 1, further comprising a range identifying part configured to identify two or more continuous points with the risk value being more than the threshold,
wherein the display unit displays a risk area indicative of the heading of the second ship at at least one of the two or more continuous points.

3. The ship monitoring system of claim 2, wherein the display unit displays the risk area indicative of the heading of the second ship at a leading point in the heading direction of the second ship among the two or more continuous points.

4. The ship monitoring system of any one of claims 1 to 3, wherein the risk area indicative of the heading of the second ship is an OZT having a shape indicative of the heading of the second ship.

5. The ship monitoring system of any one of claims 1 to 3, wherein the risk area indicative of the heading of the second ship is a risk area to which an index having a shape indicative of the heading of the second ship is added.

6. The ship monitoring system of any one of claims 1 to 5, wherein the display unit uses mutually different display modes for an OZT of the second ship located to the right side of a heading line of the first ship and an OZT of the second ship located to the left side.

7. The ship monitoring system of any one of claims 1 to 6, wherein the first data generating part is mounted on the first ship, and includes a GNSS receiver configured to detect the position of the first ship based on a radio wave received from a GNSS (Global Navigation Satellite System).

8. The ship monitoring system of any one of claims 1 to 7, wherein the second data generating part is mounted on the first ship, and includes a radar configured to detect the position and the velocity of the second ship based on echo data generated by receiving a reflection wave of a radio wave transmitted around the first ship.

9. A ship monitoring method, comprising the steps of:
generating, by a first data generating part, first ship data indicative of a position and a velocity of a first ship;
generating, by a second data generating part, second ship data indicative of a position and a velocity of a second ship;
calculating a risk value indicative of a risk of the first ship and the second ship colliding each other, for each point on an estimated course of the second ship, based on the first ship data and the second ship data, when assuming that the first ship changes the course and reaches the point; and
displaying a risk area indicative of a heading of the second ship at the point where the risk value is more than a threshold.

10. An information processor, comprising:
a risk value calculating part configured to calculate a risk value indicative of a risk of a first ship and a second ship colliding each other, for each point on an estimated course of the second ship, based on first ship data indicative of a position and a velocity of the first ship, and second ship data indicative of a position and a velocity of the second ship, when assuming that the first ship changes the course and reaches the point; and
a display controlling part configured to display a risk area indicative of a heading of the second ship at the point where the risk value is more than a threshold.

11. A program configured to cause a computer to execute processing, the processing comprising:
calculating a risk value indicative of a risk of a first ship and a second ship colliding each other, for each point on an estimated course of the second ship, based on first ship data indicative of a position and a velocity of the first ship, and second ship data indicative of a position and a velocity of the second ship, when assuming that the first ship changes the course and reaches the point; and
displaying a risk area indicative of a heading of the second ship at the point where the risk value is more than a threshold.
